# EUROPEAN PATENT APPLICATION

(11) **EP 1 841 189 A1**
(43) Date of publication of application: **03.10.2007**
(21) Application number: 06112102.6
(22) Date of filing: 31.03.2006
(51) Int. Cl.: H04M 1/725

(54) **Mobile phone with sensor for detection of user's handling**

(71) Applicant: T & A Mobile Phones Limited, Kowloon, Hong Kong (CN)
(72) Inventor: Augui, Stéphane, 75011 Paris (FR); Ambone, Gilles, 92400 Courbevoie (FR); Fourestier, Vincent, 924000 Courbevoie (FR); Caruhel, Deny, 78510 Triel-Sur-Seine (FR)
(74) Representative: Hervouet, Sylvie

(57) **Abstract**

The invention relates to a mobile phone comprising at least one sensor (S1-S6) adapted to detect by direct contact that a user is handling said mobile phone, and processing means adapted to modify at least an user's interface functionality of said mobile phone depending on the detection.

## Description

The present invention relates to an improvement in the area of mobile phones.

Today, known mobile phones are unable to detect their environmental conditions of use, except eventually when they are connected to a hand-free kit or to a battery loading device.

However, the interaction of a mobile phone with the user, namely the way it notifies to the user of an incoming call or messages, or the backlight used with the display, or even the orientation in which an image or a text is displayed on the screen, is not always adapted to the current situation.

As an example, if an alert occurs, multiple ways are possible to notify the user. The mobile phone can play a sound, or light the backlight of the display on, or actuate a vibrator, or more generally use any other possible way in order to catch the user's attention. Each of these methods can be very efficient in some situations but are not in some other. A sound will not be heard if an embedded TV or music is currently playing. Backlighting of the display is useless if the mobile is in a bag or in a pocket. Vibration has no interest if the mobile phone has no direct contact with the user.

An aim of the invention is to optimize the working of a mobile phone, and more precisely to optimize the way it interacts with a user, depending on the way it is currently used. To this aim, the present invention proposes to make the mobile phone able to determine whether the user is currently holding the mobile phone in his hand or not, and to adapt some of the working of the mobile phone in response to this determination.

More precisely, the present invention relates to a mobile phone characterized in that it comprises at least one sensor adapted to detect by direct contact that a user is handling said mobile phone, and processing means adapted to modify at least an user's interface functionality of said mobile phone depending on the detection.

ln order to get an accurate detection, one preferred embodiment according to the invention proposes the use of several sensors suitably located at various places around the mobile phone's housing.

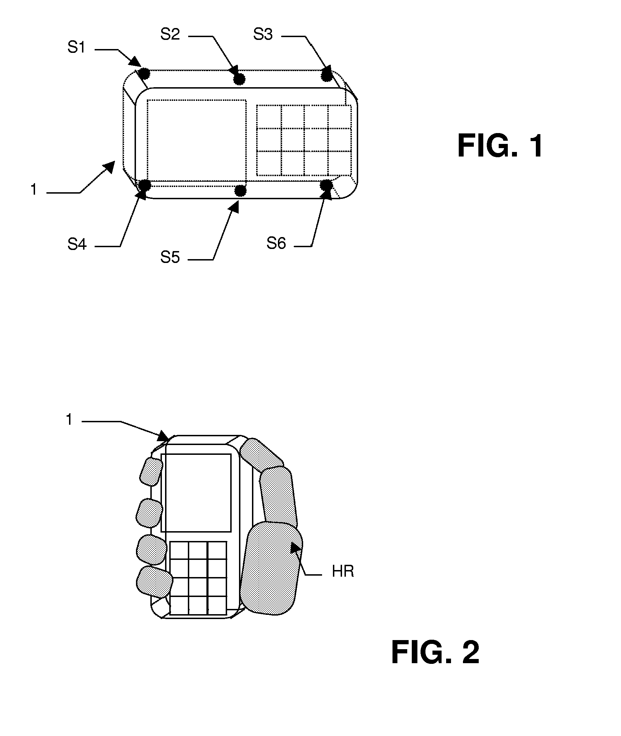

Figure 1 shows an example of a mobile phone 1 according to the invention, on which six sensors S1 to S6 have been placed, and figure 2 shows a classical situation in which mobile phone 1 of figure 1 is held by the right hand RH of the user. Another sensor may be also provided at the back side of the housing, in order to detect a possible contact with the hand's palm in the situation shown on figure 2.

ln one possible embodiment, sensors S1 to S6 are heat detectors. Due to the human skin property, the value measured by a sensor belongs to a specific range when the sensor is in contact with the skin. When the mobile is not held, all the sensors detect approximately the same value in a usual environment or some values which do not match with a handling. When held in the hand, the correlation of measured values permits to know that the mobile is currently held by the hand.

As shown on figure 1, sensors S1 to S6 are preferably located symmetrically with respect to a longitudinal axis of the mobile phone. Namely, in the example shown, three sensors S1 to S3 are located on one side of the mobile, while three other sensors S4 to S6 are located symmetrically on the other side. As it can be seen now from figure 2, hand and fingers positions are not uniform all around mobile phone 1. This asymmetric position gives different values on each sensor depending whether the mobile is held with the right hand or with the left hand. It is thus possible not only to detect that mobile phone is currently held by the user, but also to determine which hand actually holds the mobile phone.

This new approach gives supplementary information on the current way the user handles his mobile and, by keeping the history, on the general preference of the user. With such knowledge, the mobile phone can adapt the user's interface functionalities. As an example, processing means inside the mobile phone may inverse the soft key depending of the fact the user is left or right handed. By providing a detector at the front top of the mobile phone, the mobile phone can determine it is stuck to the ear and processing means can for instance modify the sound level, and/or avoid making the screen flashing since in this position, this cannot be seen by the user. Alternatively, even without any sensor provided at the front top of the mobile phone, it can be decided that sound level will be modified, for instance reduced, as soon as it has been detected that mobile phone is held by the user's hand.

On the contrary, by detecting that the mobile phone is not held by a user, and more precisely, as long as no detection that a user is currently handling the mobile phone, processing means may have been programmed to avoid the activation of vibrator upon reception of incoming event (call or message).

Another example of use is to detect in which orientation the mobile phone is actually held by the user's hand. Processing means can then decide to adapt the way of displaying an image (namely in landscape or in portrait mode) according to this detection.

In the previous example, the sensors were heat detectors. However, said sensors may be of many types, such as
- Piezoelectric detector
- Moisture detector
- Blood activity detector
and more generally every sensor which enables, through direct contact, the detection that the user's hand actually holds the mobile phone.

ln another possible embodiment, sensors used are pressure sensors. By suitably locating one or several pressure sensors on one or both sides of the mobile phone, it is possible to detect if the user is currently holding the mobile. In addition, by detecting the pressure variation on one ore several sensors, it is also possible to modify some user's interface functionalities, such as modifying the sound level depending on the pressure, or using a quick pressure variation in order to validate a particular action.

The man skilled in the art can clearly understand that the implementation of the invention is really easy to perform since the modification of user's interface functionalities depending on the output of the sensor(s) is made through software.

Other possibilities, including combining previous given examples, can be easily implemented without departing from the scope of the invention.

## Claims

1. Mobile phone (1) **characterized in that it** comprises at least one sensor (S1-S6) adapted to detect by direct contact that a user is handling said mobile phone, and processing means adapted to modify at least an user's interface functionality of said mobile phone depending on the detection.

2. Mobile phone according to anyone of the preceding claims, **characterized in that** said sensor is a heat detector, or a piezoelectric detector, or a moisture detector, or a blood activity detector, or a pressure detector.

3. Mobile phone according to anyone of the preceding claims, **characterized in that** processing means are adapted to modify the sound level, and/or to avoid making the screen flashing upon detection that a user is currently handling the mobile phone.

4. Mobile phone according to anyone of the preceding claims, **characterized in that** processing means are adapted to avoid actuation of a vibrator as long as no detection that a user is currently handling the mobile phone has occurred.

5. Mobile phone according to anyone of the preceding claims, **characterized in that** said sensor is a pressure detector adapted to detect pressure variation, and **in that** processing means are adapted to modify sound level depending on said pressure.

6. Mobile phone according to anyone of the preceding claims, **characterized in that** said sensor is a pressure detector adapted to detect pressure variation, and **in that** processing means are adapted to validate a particular action on detection of a quick pressure variation.

7. Mobile phone (1) according to anyone of the preceding claims, **characterized in that** it comprises a plurality of sensors symmetrically located with respect to a longitudinal axis of said mobile phone (1), in order to be able to detect not only that a user is handling said mobile phone, but also which hand between right or left hand is currently holding said mobile phone.

8. Mobile phone (1) according to claim 7, **characterized in that** processing means are adapted to inverse the soft key depending on the detection of the right or left hand.
